# EUROPÄISCHE PATENTANMELDUNG

(11) **EP 2 336 935 A1**
(43) Veröffentlichungstag der Anmeldung: **22.06.2011**
(21) Anmeldenummer: 10014170.4
(22) Anmeldetag: 30.10.2010
(51) Int. Cl.: G06F 21/00

(54) **Verfahren zum zugriffsicheren Versenden einer PIN an einen Endkunden**

(30) Priorität: 17.11.2009 DE 102009053448
(71) Anmelder: Austria Card Plastikkarten und Ausweissysteme GmbH, 1232 Vienna (AT)
(72) Erfinder: Bleier Bernhard, 2700 Wiener Neustadt (AT)
(74) Vertreter: Riebling, Peter

(57) **Zusammenfassung**

Die Erfindung betrifft ein Verfahren Verfahren zum zugriffsicheren Versenden einer PIN an einen Endkunden, z.B. Bankkunden, wobei zum einen eine Geld-/Kreditkarte per Post mit Decodierungs-Maske an den Endkunden versendet wird, zum anderen zusätzlich eine elektronische Nachricht, wie z.B. SMS oder e-mail, mit der codierten PIN, welche mittels der per Post erhaltenen Decodierungs-Maske durch den Endkunden in die PIN decodiert werden kann. Die Problemstellung besteht darin, eine PIN möglichst einfach, kostengünstig und sicher an den Endkunden zu versenden.

## Beschreibung

Eine PIN ist eine Persönliche Identifikationsnummer, Geheimzahl, PIN-Nummer oder auch PIN-Code mit der man sich gegenüber einer Maschine authentisieren kann. Ursprünglich besteht eine PIN nur aus Ziffern, inzwischen gibt es aber auch Banken, die etwa beim Online-Banking PINs aus Ziffern und Buchstaben vorschreiben.

Eine häufige Anwendung für PINs ist die Authentifizierung an einem Geldautomaten. Hier ist die Eingabe einer mindestens vierstelligen Zahl nötig, um einen Kontozugriff durch unbefugte Personen zu verhindern oder zumindest zu erschweren. Auch kann man mit der Bankkarte und der zugehörigen PIN in vielen Geschäften bargeldlos zahlen.

Auch für das Internetbanking ist zumeist eine PIN nötig. Mit dieser PIN und den Kontodaten kann man sich sein Konto, den Kontostand und die letzten Buchungen ansehen. Mit einer TAN kann man dann eine Überweisung tätigen oder andere Bankgeschäfte abwickeln.

PINs werden auch zum Schutz von Mobiltelefonen vor unberechtigter Nutzung und in vielen weiteren Anwendungsgebieten der Technik verwendet, wo ein Mindestmaß an Sicherheit erforderlich ist. SIM-Karten für Mobiltelefone werden mit einer PIN, PIN2, PUK und PUK2 ausgeliefert. Alle Codes sind auf der SIM-Karte gespeichert. PINs sind veränderbar, PUKs nicht. Die PUKs dienen für die Entsperrung gesperrter PINs. Die PIN2 wird zum Ändern von speziellen oft kostenpflichtigen Diensten verwendet.

### Stand der Technik:

Karten-PINs werden heute meist in separaten PIN-Briefen verschickt, wodurch dem Karteninhaber neben der Karte eine zweite Postsendung übermittelt werden muss. Die getrennte Übermittlung von Karte und PIN ist aus Sicherheitsgründen (Zweck ist eine 2-Faktor-Authentifizierung) unerlässlich.

Die Übermittlung von PINs muss jedoch nicht postalisch erfolgen, sondern kann auch elektronisch erfolgen, z. B. per SMS. Siehe dazu EP1195973A1_DigitalRum_Method for registering a user into new services by sending a permanent PIN via SMS or e-mail.pdf.

Ähnlich sind auch DE20014381U1_RentABrain_Vorrichtung zur Legitimationsprüfung .pdf, jedoch mit der Einschränkung auf "temporäre PINs" (also in unserer Fachsprache nicht PINs, sondern TANs), und US6112078A_Nokia_Method for obtaining at least one item of user authentication data.pdf.

### Problemstellung:

Elektronische Übertragung ist grundsätzlich unsicher in dem Sinne, dass die übertragene Information unberechtigten Dritten bekannt wird. Im Falle der SMS-Übertragung können zumindest Mitarbeiter des Mobilfunkbetreibers diese Information einsehen. Ein sicherer (verschlüsselter) elektronischer Übertragungskanal lässt sich mit einem privaten Nutzer nur unter hohem Aufwand einrichten. Die Problemstellung besteht also darin, die elektronisch übertragene PIN-Information mit möglichst geringem Zusatzaufwand abzusichern.

### Lösung:

In der Postsendung, die die Karte enthält, befindet sich zusätzliche Information, die der Karteninhaber dann dazu verwenden kann, die PIN aus der elektronisch erhaltenen Information zu extrahieren. Ohne diese zusätzliche Information ist es andererseits nicht möglich, die PIN aus der elektronisch erhaltenen Information zu extrahieren.

Best mögliche Ausführung der Erfindung:
Die zusätzliche Information wird auf den Carrier gedruckt, auf dem die Karte aufgeklebt wird.
Z. B.: In der SMS (oder auch e-mail) werden z.B. 10 digits übertragen und die PIN entsprechend einer Maske eingebettet.

Am Carrier befindet sich ebenfalls die Maske und die PIN kann somit enthüllt werden.

Somit ist die SMS ohne Carrier nutzlos!

Es wird lediglich die Übertragung einer sensitiven PIN über einen unsicheren (elektronischen) Kanal wie zum Beispiel eine SMS durchgeführt. Um die sensitive PIN während der Übertragung zu schützen wird diese maskiert. Die Maskierung der sensitiven PIN geschieht mittels Zufallszahlen da eine PIN nur aus Ziffern besteht.

Die Maske, notwendig zum Demaskieren, wird auf einen Kartencarrier aufgedruckt. Der Kunde erhält den Kartencarrier und die Karte und auf elektronischen Weg (z.B. per SMS) die maskierte PIN und kann somit die PIN demaskieren (two factor authentication).

Weiters ist die PIN gleichwertig wie eine durch einen Standard PIN-mailer postalisch versendeten PIN Brief und muss nicht nachträglich geändert werden (kein Initial/Start PIN). Ebenso wird ausschließlich die Übertragung einer sensitiven PIN über unsichere elektronische Kanäle durchgeführt und nicht die offline PIN Funktionalität auf der Chipkarte und damit verbundene Mechanismen und Regeln.

Mehrwert der vorliegenden Erfindung ist die Einsparung der zusätzlichen postalischen Versendung des PIN Mailers.

### Bsp:

Maske ist 247B (aufsteigend)
PIN ist 1234
Stelle:1 2 3 4 5 6 7 8 9 A B C D E F
enc PIN via SMS ist: 8 1 5 2 3 0 3 9 2 6 4 8 6 3 7
Am Carrier steht dann: Verwenden sie die 2., 4., 7. und 11. Stelle als Ihre PIN

## Patentansprüche

1. Verfahren zum zugriffsicheren Versenden einer PIN an einen Endkunden, z.B. Bankkunden, **dadurch gekennzeichnet, dass** zum einen eine mittels uncodierter PIN gesicherte Geld-/Kreditkarte zusammen mit einer darauf befindlichen oder getrennt davon auf einem Träger befindlichen Decodierungs-Maske per Post an den Endkunden versendet wird, und zum anderen zusätzlich eine elektronische Nachricht, z.B. per SMS auf ein Mobiltelefon oder e-mail auf ein Mobiltelefon, an den Endkunden versendet wird, mit einer von den persönlichen Daten des Endkunden unabhängig codierten PIN, welche mittels der per Post erhaltenen Decodierungs-Maske durch den Endkunden in die uncodierte PIN decodiert werden kann.

2. Verfahren nach Anspruch 1, **dadurch gekennzeichnet, dass** zeitlich gesehen zuerst der Postversand der Geld-/Kreditkarte mit Decodierungs-Maske erfolgt und nach Rückbestätigung des Erhalts an den Absender durch den Endverbraucher per elektronische Nachricht, z.B. per SMS oder e-mail, zeitlich nachfolgend die elektronische Nachricht mit der codierten PIN erfolgt.

3. Verfahren nach Anspruch 1, **dadurch gekennzeichnet, dass** zeitlich gesehen zuerst die elektronische Nachricht mit der codierten PIN erfolgt und nach Rückbestätigung des Erhalts an den Absender durch den Endverbraucher per elektronische Nachricht, z.B. per SMS oder e-mail, zeitlich nachfolgend der Postversand der Geld-/Kreditkarte mit Decodierungs-Maske erfolgt.

4. Verfahren nach Anspruch 2, **dadurch gekennzeichnet, dass** die elektronische Nachricht mit der codierten PIN an diejenige Telefonnummer bzw. Adresse der SMS bzw. e-mail erfolgt, welche den Erhalt der Geld-/Kreditkarte mit Decodierungs-Maske rückbestätigt.

5. Verfahren nach Anspruch 3, **dadurch gekennzeichnet, dass** die Geld-/Kreditkarte mit Decodierungs-Maske an diejenige Adresse per Post erfolgt, die in der SMS bzw. e-mail angegeben wurde, die den Erhalt der elektronische Nachricht mit der codierten PIN bestätigt.

6. Verfahren nach einem der Ansprüche 1 bis 5, **dadurch gekennzeichnet, dass** sich die Decodierungs-Maske auf einem Carrier z.B. aus Papier und/oder Kunststoff befindet, auf dem die Geld-/Kreditkarte aufgeklebt wird.

7. Verfahren nach einem der Ansprüche 1 bis 6, **dadurch gekennzeichnet, dass** die Codierung der PIN mittels einer Reihe von Zufallszahlen oder Zufallsbuchstaben geschieht, zwischen welche die einzelnen Zahlen bzw. Buchstaben der PIN an beliebigen Stellen eingefügt werden.
